# EUROPÄISCHE PATENTANMELDUNG

(11) **EP 4 617 748 A1**
(43) Veröffentlichungstag der Anmeldung: **17.09.2025**
(21) Anmeldenummer: 24163494.8
(22) Anmeldetag: 14.03.2024
(51) Int. Cl.: G02B 6/44

(54) **ANSCHLUSSBOX MIT ZUGENTLASTUNG**

(71) Anmelder: Hauff-Technik GRIDCOM GmbH, 73494 Rosenberg (DE)
(72) Erfinder: KRAUSE, David, 86150 Augsburg (DE); LAUMER, Peter, 82131 Gauting (DE); MAYR, Martin, 82395 Untersöchering (DE); BÄUERLE, Manfred, 73492 Rainau-Saverang (DE); HIMMELSBACH, Daniel, 70192 Stuttgart (DE)
(74) Vertreter: Szynka Smorodin Patentanwälte Partnerschaft mbB

(57) **Zusammenfassung**

Die Erfindung betrifft eine Glasfaser-Anschlussbox mit einem Gehäuse und einer Zugentlastungsvorrichtung zum Fixieren einer ersten Ummantelung zumindest einer oder für zumindest eine erste Glasfaserleitung, wobei die Zugentlastungsvorrichtung aufweist ein Klemmelement (62), das lösbar in dem Gehäuse montiert oder montierbar ist, und eine Aufnahme für die erste Ummantelung, die nach dem Lösen und Demontieren des Klemmelements (62) zugänglich ist, wobei die Zugentlastungsvorrichtung dazu ausgelegt ist, dass das Klemmelement (62) nach Einbringen der ersten Ummantelung in die Aufnahme und nach Wiedermontieren des Klemmelements (62) in dem Gehäuse zu einem Verklemmen der ersten Ummantelung relativ zu dem Gehäuse beiträgt, wobei das Klemmelement (62) auf einer zu der ersten Ummantelung in deren geklemmtem Zustand abgewandten Seite des Klemmelements (62) eine Haltestruktur für mindestens eine weitere zweite Glasfaserleitung aufweist.

## Beschreibung

Die vorliegende Erfindung betrifft eine Glasfaser-Anschlussbox und ihre Verwendung.

Glasfasern (oder "Lichtwellenleiter") sind fortschrittliche Signalträger und in zunehmendem praktischem Einsatz. Insbesondere werden mehr und mehr Gebäude mit Glasfaseranschlüssen zur Datenübertragung versehen. Dabei kommen Kabelstränge mit einer größeren Zahl einzelner, jeweils ummantelter Glasfaserleitungen an, wobei die ummantelten Einzelleitungen im Folgenden als Kabel bezeichnet werden. Der Kabelstrang (in diesem Sinn mit einer Anzahl Kabel darin) ist einerseits ebenfalls ummantelt und natürlich können z. B. bei der Erdverlegung auch viele solche Kabelstränge zu noch stärkeren Leitungen zusammengefasst sein, die ihrerseits im Alltag auch oft als Kabel bezeichnet werden, im Folgenden aber nicht gemeint sind.

Wenn "Abnehmer", also Geräte und Anschlüsse für Geräte in Büros, Wohnungen, Produktionsflächen und dergleichen, mit einem Glasfasernetz verbunden werden, wird typischerweise ein Gebäudeanschluss erstellt, möglicherweise auch ein Anschluss für einen Gebäudeteil, je nach Anschlusszahl und Dimensionen. Hier sind Glasfaser-Anschlussboxen gebräuchlich, in denen einzelne Kabel aus einem Kabelstrang individuell angeschlossen werden, sei es für neue Anschlüsse oder auch zur Änderung bestehender Anschlüsse.

Grundsätzlich sind dabei Steckverbindungen und im Vergleich eher auf Dauer angelegte Spleißstellen im Einsatz. Für Steckverbindungen sind Aufnahmen gebräuchlich, die im Folgenden als Kupplungen bezeichnet werden. In eine solche Kupplung können miteinander zu verbindende Steckelemente eingeführt werden, werden darin gehalten und stellen damit den Anschluss der jeweiligen Kabel aneinander sicher. Man spricht auch von Patchstellen. Spleißstellen sind vergleichsweise empfindlich und werden in der Regel durch eine Spleißschutzvorrichtung umfasst und damit gehalten und geschützt, mit welcher Spleißschutzvorrichtung sie in eigens hierfür vorgesehenen Ablagen, also Plätzen zur Fixierung, abgelegt werden können. Oft werden aus dem Kabelstrang eingehende Kabel über eine solche Spleißstelle an sogenannte Pigtail-Kabel angeschlossen, die nur innerhalb der Anschlussbox verlaufen und an ihrem der Spleißstelle entgegengesetzten Ende ein Einsteckelement für eine Patchstelle aufweisen.

Gerade bei Gebäudeanschlüssen werden für eine gewisse Zahl solcher einzelner Verbindungsstellen Anschlussboxen mit einem Gehäuse benutzt, welches typischerweise einen Deckel und ein Unterteil aufweist und typischerweise für eine Wandmontage an einer vertikalen Wand vorgesehen ist. Solche Anschlussboxen bestehen typischerweise aus Kunststoff, insbesondere aus Spritzgussteilen. Davon zu unterscheiden sind Verteilerschränke, insbesondere aus Metall, oft mit Glastüren, in denen viel größere Zahlen von Anschlüssen in Stapeln von übereinander oder nebeneinander liegenden Modulen untergebracht sind. Mit einer Anschlussbox ist im Folgenden weder ein solcher Verteilerschrank noch das Gehäuse eines Modulstapels oder eines Moduls darin gemeint, sondern eine eigenständige Anschlussbox mit einer maximalen Anschlusszahl von z. B. vorzugsweise bis höchstens 288 Patchstellen und/oder für bis zu höchstens 576 Spleißstellen (bezogen auf die angeschlossene Zahl von Einzelfasern). Verteilerschränke sind deutlich größer. Kleinere Anschlussboxen sind natürlich auch gemeint.

Das Gehäuse einer solchen Anschlussbox dient primär dem Schutz vor mechanischen Beeinträchtigungen, etwa unbefugtem Zugriff oder unbeabsichtigten Beschädigungen, dem Schutz vor Schmutz, insbesondere Staub, und in vielen Fällen auch einem gewissen Feuchtigkeitsschutz, z. B. gegen Spritzwasser, jedenfalls im montierten Zustand.

Solche Anschlussboxen werden von spezialisierten Herstellern in verschiedenen Varianten angeboten und sind dabei mit verschiedenen Einbauteilen ausgestattet. Diese sind ausgelegt zum Halten, Führen, geordneten Ablegen von Überlängen von Kabeln und auch zum organisierten Halten von Spleißstellen, Kupplungen und gegebenenfalls weiteren Elementen wie Splittern, Filtern, Weichen etc. Der Anwender bzw. Kunde wählt eine ihm geeignet erscheinende Anschlussbox aus, wobei er möglicherweise nicht alle montierten Einbauteilen nutzt und ein Teil davon für eventuelle zukünftige Nutzungen verbleibt.

Der Erfindung liegt die Aufgabe zugrunde, eine praktisch verbesserte Anschlussbox und vorteilhafte Verwendungen dazu anzugeben.

Gelöst wird diese Aufgabe durch eine Anschlussbox nach Anspruch 1 und deren Verwendung nach den Ansprüchen 13-15, wobei bevorzugte Ausgestaltungen der Anschlussbox in den abhängigen Ansprüchen 2-12 angegeben sind.

Die Anschlussbox zeichnet sich durch eine Zugentlastungsvorrichtung zum Fixieren einer Ummantelung zumindest einer Glasfaserleitung aus. Mit einer Ummantelung ist zunächst eine Schutzhülle um die eigentliche Glasfaserleitung herum gemeint. Insbesondere betrifft dies eine solche Schutzummantelung, die eine Mehrzahl eigens ummantelter Glasfaserleitungen oder sogar eine Mehrzahl Bündel aus solchen Glasfaserleitungen in sich umschließt, also die Ummantelung eines Strangkabels. Schließlich ist in dem Begriff auch ein im Folgenden noch näher erläutertes Leerrohr inbegriffen, dass zum späteren Einführen einer Glasfaserleitung, insbesondere eines Strangkabels, dient. Ein solches Leerrohr kann im Hinblick auf die mechanische Zugentlastung und möglicherweise auch im Hinblick auf eine Abdichtung um die Ummantelung herum leer installiert werden und zu einem späteren Zeitpunkt erst mit Inhalt bestückt werden, insbesondere durch Einblasen einer Leitung, vorzugsweise eines Strangkabels.

Die erfindungsgemäße Zugentlastungsvorrichtung weist eine Aufnahme für die Ummantelung auf und ein Klemmelement, das zum Zugang zu der Aufnahme demontiert wird. Das Klemmelement trägt nach dem Einbringen der Ummantelung in die dafür vorgesehene Aufnahme und nach dem Wiedermontieren des Klemmelements zu einem Verklemmen und damit einer Fixierung der Ummantelung relativ zu dem Gehäuse der Anschlussbox bei. Das kann z. B. durch einen Andruck des Klemmelements an die Ummantelung und/oder durch zur Verklemmung beitragende Strukturen wie Krallvorsprünge geschehen. Dies betrifft diejenige Seite des Klemmelements, die in seinem montierten Zustand der Aufnahme für die Ummantelung und damit auch der Ummantelung zugewandt ist. Im Folgenden ist von der "ersten" Seite und Ummantelung die Rede.

Erfindungsgemäß ist auf einer dazu abgewandten "zweiten" Seite des Klemmelements eine weitere Haltestruktur für mindestens eine weitere "zweite" Glasfaserleitung vorgesehen. Das Klemmelement hat also insoweit eine zweite Funktion. Vorzugsweise handelt es sich dabei um eine Haltestruktur zum Klemmen einer weiteren, nämlich "zweiten" Ummantelung auf dieser der ersten Ummantelung abgewandten Seite des Klemmelements, worauf noch näher eingegangen wird.

Grundsätzlich kann es aber auch um eine ganz andere Haltestruktur gehen, z. B. um eine auf der zweiten Seite des Klemmelements vorgesehene Kupplung (zur Aufnahme von Glasfasersteckelementen) oder einen Halter für eine solche Kupplung oder auch nur eine Montagemöglichkeit für einen solchen Halter. Andere Beispiele sind Halterungen für Splitter oder Filter.

Bevorzugt ist jedoch die Klemmfunktion des Klemmelements hinsichtlich der ersten und der zweiten Ummantelung gleich oder ähnlich. Eine Möglichkeit ist bspw. ein Andruck des Klemmelements auf die erste Ummantelung durch die Montage des Klemmelements. Bspw. könnte das Klemmelement in der montierten Position verrasten und damit einen Kraftschluss für die erstgenannte Ummantelung herstellen. Außerdem könnte das Klemmelement z. B. mindestens auf der zu dieser Ummantelung abgewandten zweite Seite Krallvorsprünge für die zweite Ummantelung aufweisen, wobei diese durch eine zusätzliche Struktur aufgedrückt wird.

Eine besonders einfache und hinsichtlich der Anwendungsmöglichkeiten besonders flexible Lösung bieten Kabelbinder. So kann auf der verrasteten Klemmstruktur mit einem Kabelbinder eine zweite Ummantelung fixiert werden. Auch die erste Ummantelung kommt für eine Kabelbinderfixierung in Betracht. Besonders bevorzugterweise ist die Klemmstruktur im Hinblick auf ihre beiden Funktionen für die Verwendung von Kabelbindern ausgelegt, in dem sie entsprechende Strukturen dafür aufweist.

Solche Strukturen können z. B. Ausnehmungen am Rand des Klemmelements sein, in die ein Kabelbinder eingelegt und in denen er durch Festziehen fixiert werden kann. Dabei sollen die Ausnehmungen ein Verrutschen des Kabelbinders unterbinden. Besonders bevorzugt sind Öffnungen zum Durchfädeln des Kabelbinders, und zwar mindestens eine für mindestens einen Kabelbinder, vorzugsweise für zwei Kabelbinder und vorzugsweise zwei pro Kabelbinder. Besonders bevorzugterweise sind für Ummantelungen auf beiden Seiten des Klemmelements jeweils zwei Kabelbinder und damit insgesamt vier pro Klemmelement möglich, für die mindestens vier und vorzugsweise acht Ausnehmungen/Öffnungen vorgesehen sind. Die Ausnehmungen und vorzugsweise Öffnungen für verschiedene Kabelbinder sind dabei vorzugsweise in einer Richtung nebeneinander angeordnet und die vorzugsweise zwei pro Kabelbinder in einer dazu ungefähr senkrechten Richtung nebeneinander angeordnet.

Bei einer besonders günstigen Ausgestaltung sind dabei diejenigen Ausnehmungen und insbesondere Öffnungen für den oder die Kabelbinder für die erste Ummantelung ausreichend breit, damit auch ein Verschluss des zumindest einen Kabelbinders darin untergebracht werden kann. Mit dieser Möglichkeit muss in der Aufnahme für die erste Ummantelung nicht zwingend auch noch Platz genug für diesen Verschluss sein.

Ähnliches kann auch im Hinblick auf die zweite Ummantelung gelten. Da aber bei einer bevorzugten Ausgestaltung im Bereich der fixierten zweiten Ummantelung mehr Platz ist (weil sie etwa beim Ausführungsbeispiel "über" dem Klemmelement liegt), kann im Hinblick auf die zweite Ummantelung aber auch auf diese Option verzichtet werden und damit das Klemmelement etwas kleiner bleiben.

Das Klemmelement ist vorzugsweise mit einer Bewegungsrichtung quer zu einer Leitungsrichtung der ersten Ummantelung (bezogen auf den fixierten Zustand der Ummantelung und mit darin vorgesehener Leitung) demontierbar (also beim Ausführungsbeispiel nach "oben"). Dies ermöglicht eine günstige und insbesondere in der Leitungsrichtung kompakte Bauform mit guter Stabilität.

Außerdem sieht eine vorteilhafte Ausgestaltung vor, dass die erste Ummantelung quer zu ihrer Leitungsrichtung (wieder bezogen auf die fixierte Situation mit Leitung in der Ummantelung) in die Aufnahme eingelegt werden kann. Die erste Ummantelung muss also nicht durchgefädelt werden, sondern die Demontage des Klemmelements ermöglicht ein viel einfacheres Einlegen in Querrichtung.

Die Zugentlastungsvorrichtung hat vorzugsweise eine Führung für das Klemmelement, die eine geführte Bewegung in die montierte Position ermöglicht, im Fall des Ausführungsbeispiels etwa von oben nach unten, wobei wiederum bevorzugterweise eine Rasteinrichtung zum Verrasten des Klemmelements in der montierten Position vorgesehen ist. Damit lässt sich das Klemmelement im Hinblick auf das richtige Einsetzen und das sichere Erreichen der richtigen Montageposition einfach und zuverlässig montieren. Zum Demontieren muss dann ein gewisser Widerstand der Rasteinrichtung überwunden werden oder z. B. ein Schnapphaken gelöst werden wie beim Ausführungsbeispiel.

Weiter oben wurde bereits auf die Möglichkeit der verbesserten Klemmung durch Krallvorsprünge des Klemmelements eingegangen, die in der Tat bevorzugt sind. Das gilt namentlich auch in Kombination mit weiteren Klemmmitteln, insbesondere Kabelbindern. Z. B. können Kabelbinder eine Ummantelung an das Klemmelement heranziehen und damit die Krallvorsprünge in Kraftschluss mit einer Oberfläche der Ummantelung bringen, möglicherweise auch etwas in diese eindrücken.

Die erfindungsgemäße Zugentlastungsvorrichtung lässt sich besonders günstig mit mindestens einer abgedichteten Durchführung für mindestens die erste Ummantelung kombinieren, wobei vorzugsweise diese Durchführung im Hinblick auf das Gehäuse außerhalb der Zugentlastungsvorrichtung liegt, wobei also letztere aus der Perspektive der Durchführung im Gehäuseinneren angeordnet ist. Dabei kann eine Mehrzahl Zugentlastungsvorrichtungen nebeneinander vorgesehen sein, die sinnvollerweise einer entsprechenden Mehrzahl Dichtungen zugeordnet sind, insbesondere darauf ausgerichtet sind.

Bei einer besonders vorteilhaften Ausgestaltung der Dichtungen sind diese anpassbar an verschiedene Leitungsdimensionen, insbesondere durch Abtrennen von Elastomerkörperteilen der Dichtungen.

Auch für die Dichtungen gilt, was zuvor bereits für die Zugentlastungsvorrichtungen erläutert wurde, nämlich dass sie vorzugsweise für ein Einlegen quer zur Leitungsrichtung der hindurchzuführenden Ummantelungen, vorgesehen sind. Z. B. können entsprechende Elastomerkörper geschlitzt sein oder geschlitzt werden und vorteilhafterweise zu diesem Zweck auch aus einer zugehörigen Halterung in der Gehäusewand entnommen und um die Ummantelung, herumgelegt werden. Auch hier erübrigt sich damit ein Hindurchfädeln der Länge nach.

Die Anpassbarkeit der Dichtungen schafft eine Flexibilität für unterschiedliche Ummantelungen und eventuell weitere Leitungen. Vorzugsweise sind die Zugentlastungsvorrichtungen ebenfalls in diesem Sinn anpassbar, was bspw. bei der Verwendung von Kabelbindern im besonders praktischer Weise der Fall ist. Insoweit können dann an sich identische oder jedenfalls hinsichtlich der hier betrachteten Komponenten gleiche Anschlussboxen für unterschiedliche Ummantelungen und andere Leitungen benutzt werden.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigen
- Figur 1: eine perspektivische Ansicht einer erfindungsgemäßen Anschlussbox mit einem geöffneten Gehäuse und einem in ein Unterteil des Gehäuses eingelegten Bodenteil;
- Figur 2: eine Seitenansicht der Anschlussbox aus Figur 1, wobei in einem von dem Bodenteil nach links oben hochragenden Aufnahmeteil Spleißkassetten gelenkig aufgenommen sind und in Figur 2 hochgeklappt dargestellt sind (dabei sind in Figur 2 vordere Seitenwandteile des Gehäuseunterteils aus darstellerischen Gründen weggelassen);
- Figur 3: das Unterteil der Anschlussbox einzeln, insbesondere ohne eingesetztes Bodenteil;
- Figur 4a: das Bodenteil der Anschlussbox einzeln in Figur 1 entsprechender perspektivischer Darstellung und zur plastischeren Sichtbarkeit mit Grauschattierungen;
- Figur 4b: eine zu Figur 4a identische Darstellung, jedoch ohne Grauschattierungen;
- Figur 5: das Bodenteil aus den Figuren 4 mit darin montierten Einzelteilen und einer beispielhaften Kabelführung;
- Figur 6: eine ähnliche Darstellung wie Figur 5, jedoch mit anderen montierten Einzelteilen und einer anderen beispielhaften Kabelführung;
- Figur 7a: eine perspektivische Ansicht einer Dichtung für die Anschlussbox als einstückiger Elastomerkörper mit Grauschattierungen;
- Figur 7b: eine zu Figur 7a identische Darstellung, jedoch ohne Grauschattierungen;
- Figur 8: ein einzelnes Dichtungselement der Dichtung in einer Darstellung analog Figur 7b;
- Figur 9: das Dichtungselement aus Figur 8, wobei jedoch ein Stück weggeschnitten ist;
- Figur 10: eine perspektivische Darstellung zweier durch eine Vorderwand des Unterteils der Anschlussbox hindurchgeführter Leerrohre unter Weglassung der Dichtung aus den Figuren 7, jedoch mit einer sichtbaren Fixierung des obersten Lehrrohres mittels zwei Kabelbindern;
- Figur 11: eine andere perspektivische Darstellung nur des unteren Lehrrohres aus Figur 10, erneut unter Weglassung der Dichtung aus den Figuren 7 und außerdem unter Weglassung von zwei Kabelbindern zur besseren Sichtbarkeit eines Klemmelements.

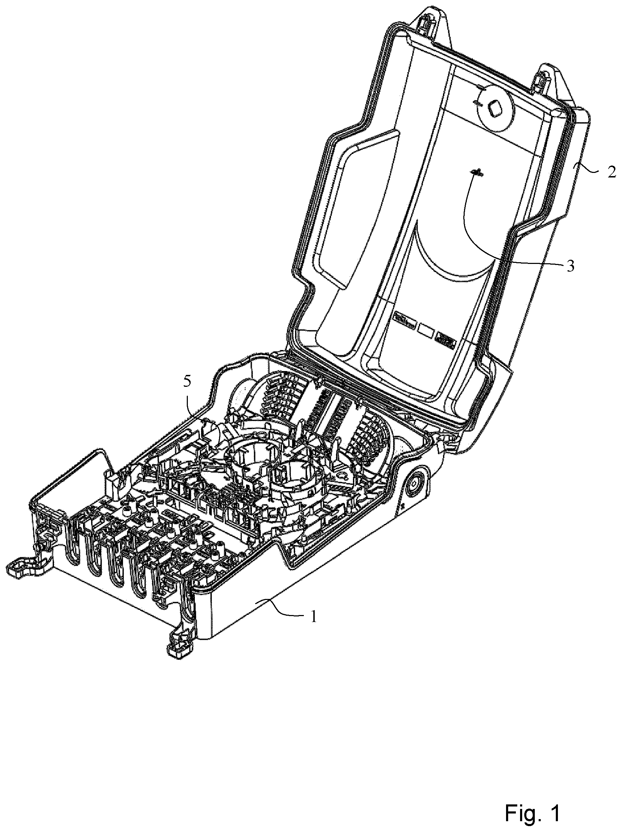

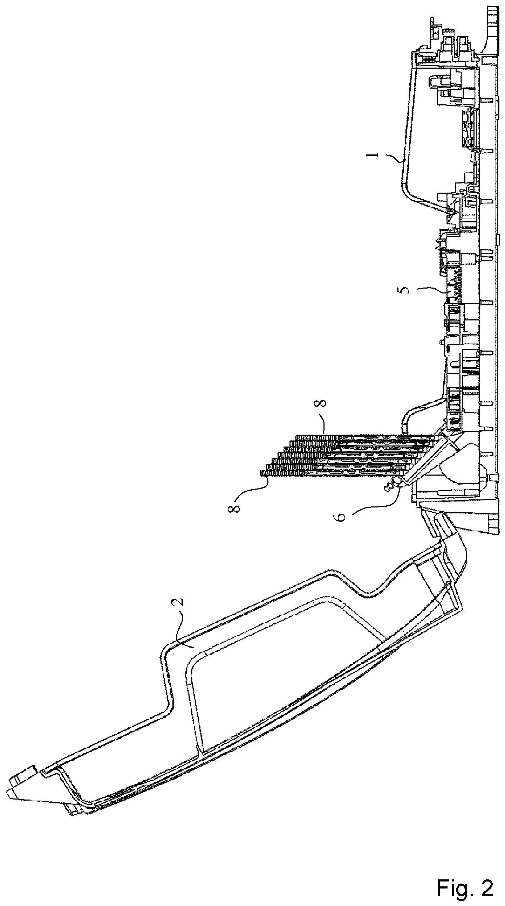

Die erfindungsgemäße Anschlussbox für Glasfaseranschlüsse in den Figuren 1 und 2 weist ein Gehäuse auf, dass aus einem Unterteil 1 und einem Deckel 2 besteht. Diese können an der in Figur 1 hinteren rechten Seite rastend in eine Gelenkverbindung miteinander gebracht werden, sodass der Deckel 2 auf- und zuklappbar ist. Die Figuren 1 und 2 und andere zeigen den aufgeklappten Zustand des Deckels 2.

Zur Erleichterung der Darstellung wird hier eine horizontale Ausrichtung des Unterteils 1 angenommen, die aber in der praktischen Anwendung nicht zwingend ist. Insbesondere kann dieses mit seiner in den Figuren 1 und 2 nach unten weisenden Seite auch an einer Wand montiert werden, sodass der Deckel 2 dann aus einer geschlossenen vertikalen Position über eine horizontale Position hinaus aufgeklappt werden kann und muss, um Zugang zum Innenraum der Anschlussbox zu erhalten.

Im geschlossenen Zustand können Deckel 2 und Unterteil 1 auch über ein Schloss miteinander verriegelt werden, bei diesem Ausführungsbeispiel ist das optional. Das Schloss kann in dem in Figur 1 oben sichtbaren kreisförmigen Feld in dem Deckel 2 in einer (durch Ausbrechen eines hierzu vorgesehenen Teils herzustellenden) Öffnung montiert werden, ist aber an sich nicht gezeigt. Es schließt mit einem Riegel gegen ein hier nicht gezeigtes optionales Kunststoff-Schließblech. Außerdem kommen die Vorsprünge 3 des Deckels 2 im geschlossenen Zustand zur Deckung mit den Vorsprüngen 4 des Unterteils 1 und es können hier Verschraubungen oder Verplombungen vorgenommen werden.

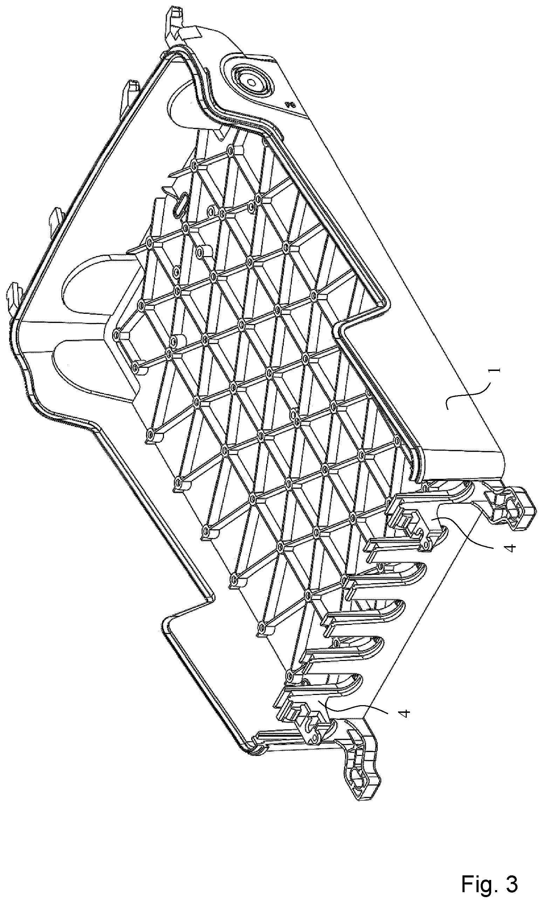

Im geschlossenen Zustand schützt die Anschlussbox vor allem von mechanischen Beschädigungen oder unbefugten Zugriffen auf den Innenraum. Im geschlossenen Zustand besteht ferner ein gewisser Feuchtigkeits- und Nässeschutz. Insbesondere ist das Unterteil 1 aus Figur 3 nach unten hin geschlossen; das dargestellte Gitter ist also eine Versteifung. Das Gitter weist an den Kreuzungspunkten (zunächst geschlossene) Stellen zum Anschrauben, z. B. auf eine Wand, auf. An den sich berührenden Kanten von Unterteil 1 und Deckel 2 können in bei diesem Beispiel deckelseitige Nuten Dichtungen eingelegt werden und jedenfalls greifen Vorsprünge am Unterteil in diese Nuten ein. Außerdem bieten die ungefähr U-förmigen Öffnungen in der nach links unten weisenden Wand des Unterteils 1 die Möglichkeit, Kabelabdichtungen anzubringen, auf die noch näher eingegangen wird. Die in Figur 3 links vorne gut sichtbaren Montagearme und ein nicht sichtbarer, aber ähnlicher mittiger Montagearm rechts hinten erlauben außerdem eine Montage des Unterteils 1 ohne innere Öffnungen in dem Unterteil 1 zur Wandseite, also mit besserem Feuchtigkeitsschutz.

Die Anschlussbox kann in ihrem Innenraum in unterschiedlicher Weise genutzt werden und für verschiedene Anschlussoptionen (Spleiß- und Patchverbindungen) sowie Kabelüberlängen unterschiedlicher Konfigurationen anbieten. Anhand der Figuren 1, 2, 4, 5, 6 wird eine sehr flexible Innenausstattung dargestellt.

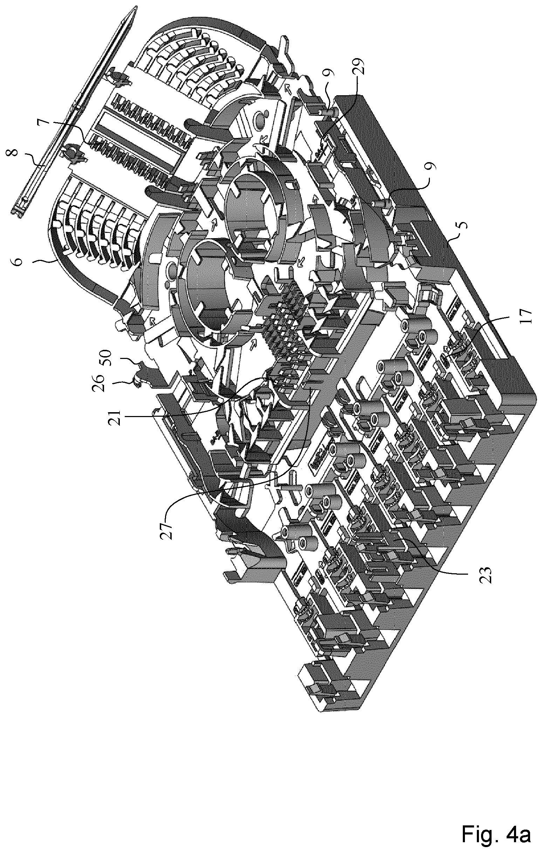

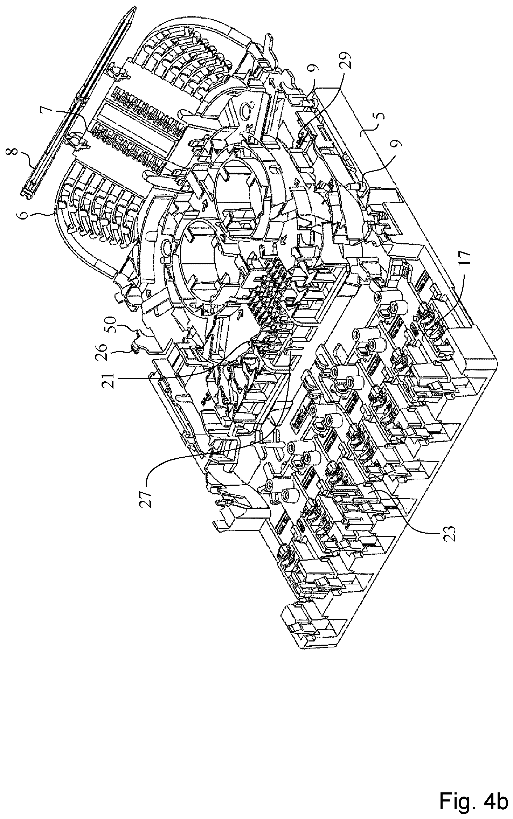

In Figur 1 sieht man bereits ein in das Unterteil 1 eingesetztes Bodenteil 5, das seinerseits in den Figur 4 einmal mit Grauschattierungen und einmal ohne dargestellt ist. Dieses Bodenteil 5 füllt das Unterteil im Wesentlichen flächig aus und weist an der der Gelenkverbindung zwischen Unterteil 1 und Deckel 2 zugewandten Seite einen schräg aufsteigenden Fortsatz auf, nämlich ein Aufnahmeteil 6 mit schräg übereinanderliegenden Gelenkaufnahmen 7 für in Figur 2 sichtbare Spleißkassetten 8, in diesem Fall maximal sieben Stück. In den Figuren 4 sieht man rechts und links davon Führungen für in die Spleißkassetten achsnah einlaufende oder daraus herauslaufende einzelne Kabel, insbesondere Pigtail-Kabel.

Die Figuren 2 und 4 verdeutlichen miteinander, dass die Spleißkassetten 8 im heruntergeklappten Zustand horizontal liegen und einen hinteren Teil der Strukturen des horizontalen Bereichs des Bodenteils 5 in den Figuren 4 verdecken, während sie im hochgeklappten Zustand gemäß Figur 2 den Zugang dazu erlauben. Außerdem wird natürlich der Zugang zu einzelnen Spleißkassetten 8 ebenfalls durch selektives Hochklappen erreicht.

Über dem Aufnahmeteil 6 sieht man in Figur 4 eine an dem Aufnahmeteil 6 angeformte und horizontal liegende Nadel 8. Diese Nadel 8 kann abgebrochen und mit ihren beiden Enden zum Manipulieren von Kabeln benutzt werden. Wenn sie nicht benötigt wird, so kann sie mithilfe des an ihrem in den Figur 4 linken Ende sichtbaren Lochs auf einem in den Figur 4 mit 9 bezeichneten vertikalen Stift am Rand fixiert werden, liegt dann parallel zu dieser Kante des Bodenteils 5 und stört bei anderen Arbeiten nicht. In der dargestellten Form handelt sich um ein mit dem übrigen Bodenteil 5 und dem Aufnahmeteil 6 spritzgusstechnisch integriertes Teil.

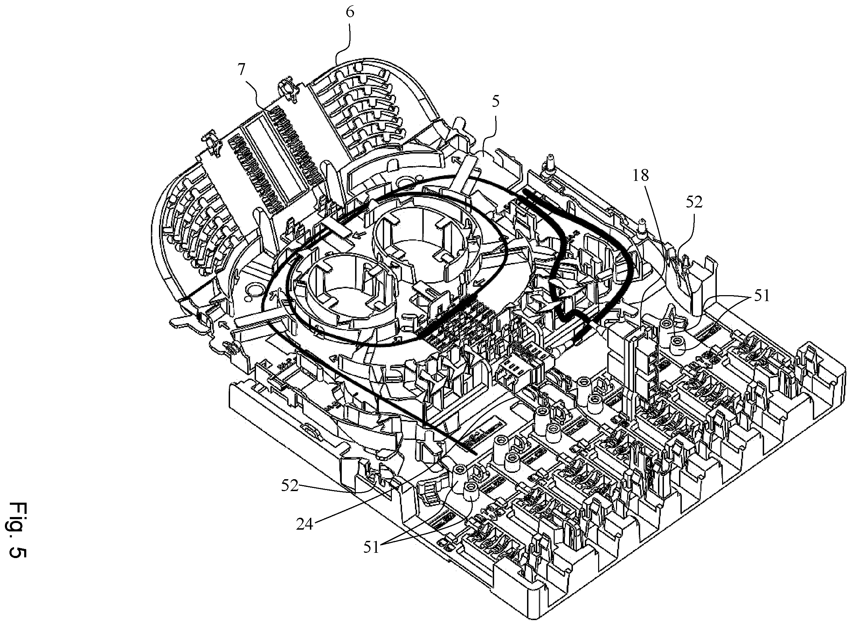

Ferner gibt es einen ersten Typ Kupplungshalter 18 gibt, der bei diesem Ausführungsbeispiel für eine lokale Leitungsrichtung der entsprechenden gekuppelten Leitungen entlang der Längsrichtung der Anschlussbox ausgelegt ist, vgl. Figur 5. Es gibt sieben entsprechende Positionen dafür, wobei in Figur 5 die dritte von rechts gewählt ist. Ein solcher Kupplungshalter 18 enthält zwei übereinanderliegende Öffnungen für jeweils eine Duplexkupplung, sodass also pro Kupplungshalte 18 maximal vier Einzelfasern gepatcht werden können. Im heruntergeklappten Zustand der Montageplatte 10 sind die Kupplungshalter 18 in allen sieben Positionen von dieser oberseitig gehalten und für Patchkabel von vorne zugänglich. Dazu muss keine Ecke der Montageplatte 10 ausgebrochen werden. Normalerweise weist die Anschlussbox sechs solche Kupplungshalter 18 auf.

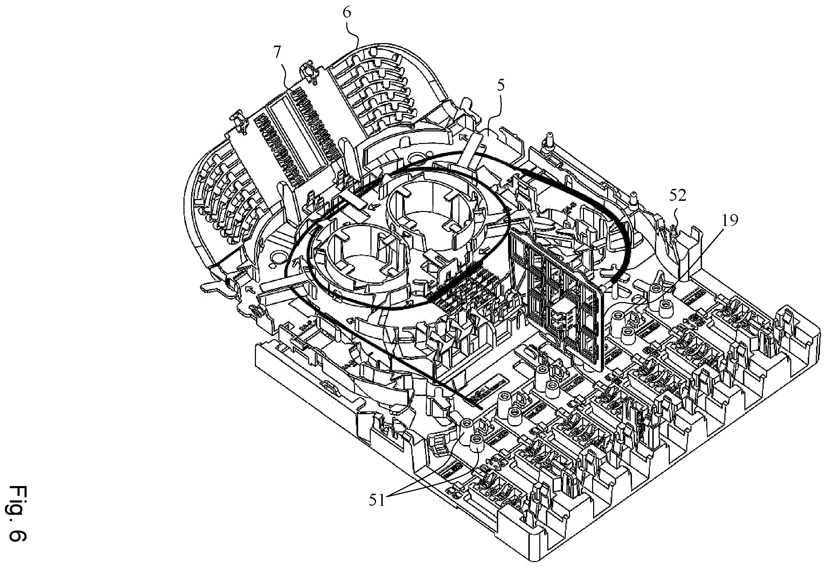

Ferner gibt es einen zweiten Typ, nämlich einen Matrix-Kupplungshalter 19, zu dem auf Figur 6 verwiesen wird. Diese Matrix 19 kann mit einer im Querschnitt quadratischen Achse 20 in einen Aufnahmebereich 21 (vgl. Figur 4) eingeclipst werden und ist in diesem Zustand (bei hochgeklappter Montageplatte 10) aus der in Figur 6 dargestellten Position um etwa 90° nach links klappbar, um im Bedarfsfall Platz zu schaffen. In der Matrix 19 finden maximal 13 Duplexkupplungen Platz.

Zusätzlich gibt es einen zusätzlichen Kupplungshalter 24, der analog zu der Matrix 19 eine 13. Duplexkupplung zulässt. Dieser "13. Kupplungshalter" 24 kann an einer in den Figur 4 mit 27 bezeichneten Stelle befestigt werden, vgl. Figur 5. Eine 13. Kupplung kann z. B. für einen separaten Gebäudeanschluss von Interesse sein und ist deswegen sowohl bei den in Längsrichtung verlaufenden als auch bei den quer dazu verlaufenden Kupplungsoptionen möglich.

Die hier erwähnten Duplexkupplungen vom Typ LC können auch durch Einfachkupplungen vom Typ SC oder E2000 ersetzt werden, was die Zahl der maximal verbindbaren Kabel halbiert.

Drehachsennäher als die besprochenen Kupplungshalter 18, 19 befindet sich ein durch die Anschlussplatte 10 effizient geschützter Bereich, der bisher im Wesentlichen in Zusammenhang mit der Aufnahme des Stapels Spleißkassetten 8 (vgl. Figur 2) besprochen wurde. Der Stapel der an dem Aufnahmeteil gelenkig gehaltenen Spleißkassetten 8 bildet dabei einen Anschlussbereich, wobei in der an sich bekannten Weise in den Spleißkassetten neben Spleißstellenablagen auch für die jeweils beteiligten Kabel eine Überlängenablage vorgesehen ist.

Auf die Möglichkeit der abgedichteten Durchführung von Kabeln durch die Vorderwand des Unterteils 1 wurde bereits hingewiesen. Typischerweise werden zum Einführen eines Bündelkabels die beiden äußersten der in diesem Zusammenhang erwähnten U-förmigen Öffnungen in der Vorderseite des Unterteils 1 verwendet, wobei dies mit oder ohne vorheriges Montieren eines Leerrohres und erst späteres Einblasen geschehen kann.

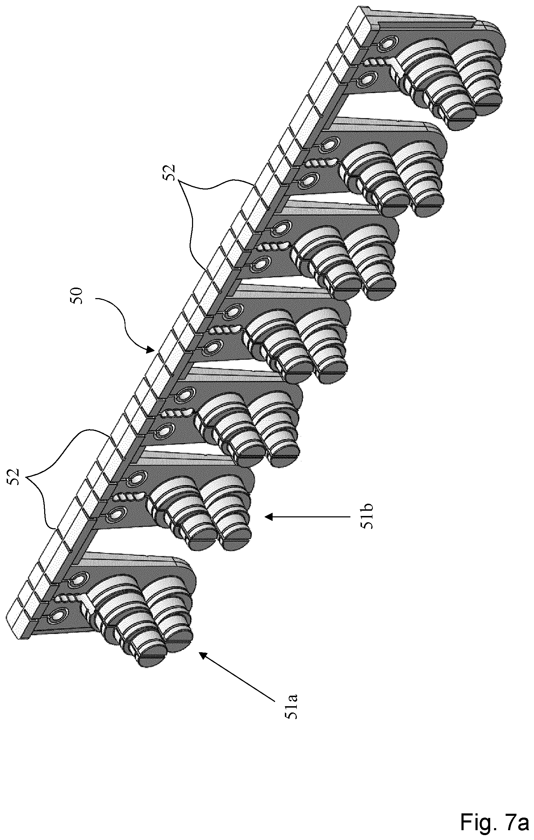

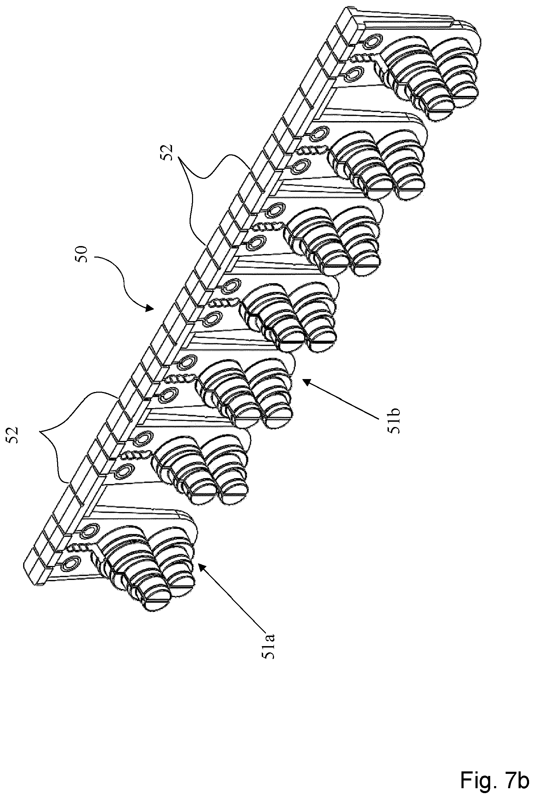

Die Figuren 7 zeigen einerseits grauschattiert und andererseits in Strichdarstellung eine perspektivische Ansicht der Dichtung für die U-förmigen Öffnungen. Es handelt sich um einen einstückigen Elastomerkörper mit sieben nebeneinander angeordneten und über einen Steg 50 oberseitig verbundenen Dichtelementen 51a/b. Diese Dichtelemente 51a/b sind zum von oben Hineinschieben in die U-förmigen Ausnehmungen des Unterteils 1 vorgesehen, wie man sich im Vergleich der Figuren 7 einerseits und z. B. 1-3 andererseits leicht vorstellen kann. In den letztgenannten sieht man links zur Veranschaulichung ein Dichtelement 51a (ohne Bezifferung). Die mittleren fünf Dichtelemente 51b sind untereinander identisch und liegen zueinander in einem etwas kleineren Querabstand. Die äußeren beiden Dichtelemente 51a sind untereinander ebenfalls identisch und ähneln im Übrigen den Dichtelementen 51b bis auf eine noch zu besprechende Abweichung weitgehend. Insgesamt ist die Dichtung rechts-links-symmetrisch.

Die Figuren 7 zeigen oberseitig an dem Steg 50 verschiedene in der Richtung einzulegender Leitungen verlaufende Markierungen, konkret Einkerbungen, wobei in den Figuren 7 diejenigen Einkerbungen 52 bezeichnet sind, die zu ihren Nachbarn in einem etwas größeren Abstand liegen und nicht über, sondern zwischen Dichtelementen 51 vorgesehen sind. Der größere Abstand außen beträgt 34 mm, der kleinere Abstand innen 28 mm. Der größere Abstand außen nimmt Rücksicht auf die größten gängigen EZA-Typen.

Die Einkerbungen markieren die Positionen zum Zertrennen des Elastomerkörpers aus den Figuren 7, also zum Abtrennen einer Gruppe von Dichtelementen 51 oder einzelner Dichtelemente. Das kann aus Handhabungsgründen vom Anwender bevorzugt sein, etwa um beim Einlegen eines Kabels oder eines Leerrohrs z. B. nur dass eine betroffene Dichtelementen 51 handhaben zu müssen, was auch das Einlegen in das Unterteil 1 betrifft. Technisch notwendig ist das Zerteilen allerdings nicht und beim Einbringen von Kabeln oder Leerrohren kann die Dichtung auch insgesamt (unzerteilt) gehandhabt werden. Das Zerteilen kann insbesondere durch Zerschneiden mit einem Messer in vertikaler Richtung erfolgen, wobei die Einkerbungen 52 über die Markierungsfunktion hinaus bereits eine deutliche Rille zum Ansetzen des Messers vorgeben.

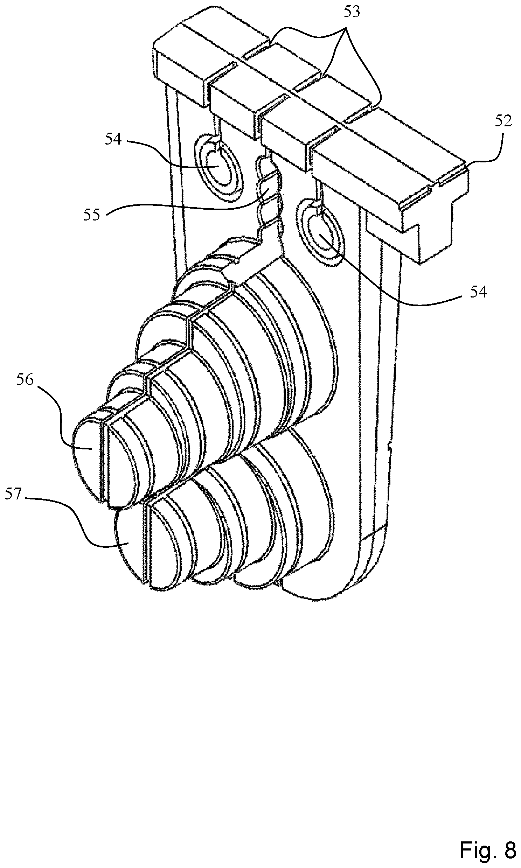

Nach dem Abteilen z. B. des linken Dichtelements 51 a aus den Figuren 7 erscheint dieses wie in Figur 8; die übrigen Dichtelemente 51 würden ähnlich erscheinen. In Figur 8 sieht man zunächst weitere Markierungen und Einkerbungen 53, die abgesehen von ihrer Position zu den bereits besprochenen Einkerbungen 52 ähnlich sind. Beide Einkerbungstypen 52 und 53 weisen in der durch eine durchgehende Linie erkennbaren Mittelebene der Dichtung (eine Naht von der formgebenden Herstellung) eine kleine Unterbrechung auf.

Die Einkerbungen 53 gehen jedoch durch die vertikale Dicke des Stegs 50 hindurch, die Einkerbungen 52 nicht. Die Einkerbungen 53 sind damit nicht nur Markierungen und Ansatzpunkte für ein Messer, sondern nach unten durchlaufende Schlitze, wie man an der Fortsetzung unterhalb des Stegs 50 in Figur 8 sieht. Diese Schlitze führen zu Durchführungen für Kabel, nämlich zwei Durchführungstypen 54 und 55.

Der Durchführungstyp 54 ist pro Dichtelement 51 doppelt vorgesehen, und zwar jeweils beidseits der Mitte (bezüglich der Querrichtung) und der Durchführungstyp 55 liegt mittig in diesem Sinn. Er enthält allerdings vier übereinanderliegende einzelne zylindrische Hohlräume, die ineinander übergehen. Hingegen gibt es pro Durchführung 54 nur einen solchen inneren zylindrischen Hohlraum, in dem sich ein (oben wieder durch den Schlitz aufgetrenntes) ringförmiges Element befindet, an den sich ein weiterer äußerer hohlzylindrischer Hohlraum anschließt. Insoweit kann man die Durchführungen 54 durch Heraustrennen des Ringelements radial vergrößern, die Durchführungen 55 nicht. Andererseits hat eine Durchführung 54 jeweils nur Platz für ein Kabel, eine Durchführung 55 allerdings für bis zu vier übereinander.

Es wurde bereits auf eine kleine Unterbrechung der Einkerbungen 52 und 53 in der Mitte des Stegs hingewiesen. Diese Unterbrechung setzt sich in die Durchführungen 54 und 55 fort und bildet dort eine Membran. Wenn also eine dieser Durchführungen benutzt werden soll, wird von oben von der Einkerbung 53 kommend mit dem Messer (nur) soweit nötig eingeschnitten. Im Fall einer Durchführung 54 muss dabei entschieden werden, ob das ringförmige Element herausgetrennt wird (herausgeschnitten oder herausgerissen), und im Fall der Durchführung 55, wie viele Kabel eingelegt werden sollen.

Konkret können die bis zu vier Kabel in der Durchführung 55 Patchkabel sein und z. B. zu dem Kupplungshalter 18 aus Figur 5 gehören. Dieser kann zwei LC-Duplex-Kupplungen aufnehmen, was vier Patchkabeln entspricht. Wie in Figur 5 erkennbar, sind die möglichen Positionen für die Kupplungshalter 18 auf die U-förmigen Plätze für die Dichtelemente 51 ausgerichtet. Natürlich können solche Patchkabel aber auch Kupplungen im Kupplungshalter 19 aus Figur 6 zugeführt werden.

Die Durchführungen 54 können als Einzelkabeldurchführungen genutzt werden und sind zunächst einmal größer. Bei diesem Beispiel können einzelne Kabel mit Durchmessern zwischen 2 und 5 mm eingelegt und abgedichtet werden.

Unter den besprochenen Durchführungstypen 54 und 55 befinden sich zwei weitere Durchführungstypen 56 und 57. Beide haben die Form einer gestuften Tülle, wobei die Figuren 7 und 8 nur außenseitige radiale Abstufungen zeigen. Diese sind aber auch innenseitig vorgesehen, also an verschiedene Leitungsdimensionen angepasst. Die untere Durchführung 57 weist in diesem Sinn drei verschiedene Durchmesser oder Radien auf, die Durchführung 56 sogar vier. Der Durchführungstyp 56 ist insoweit, wie die Figuren 7 zeigen, nur bei den beiden äußeren Dichtelementen 51a vorgesehen und dort nur jeweils einfach (oben). Der Durchführungstyp 57 existiert in diesen äußeren Dichtelementen 51a jeweils einfach (unten) und bei den inneren Dichtelementen 51b doppelt (oben und unten).

Weiterhin zeigt Figur 8, dass es auch an der Außenseite der beiden gestuften Tüllen der Durchführungen 56 und 57 mittige (bezüglich der Querrichtung) Einkerbungen zum Aufschneiden gibt. Auch hier gilt also, dass vor dem Einlegen eines Kabels ein entsprechend tief hinunter reichender Schnitt erfolgt. Die zuvor in Zusammenhang mit den Durchführungen 54 und 55 besprochene Membran besteht bei den Durchführungen 56 und 57 in diesen Einkerbungen.

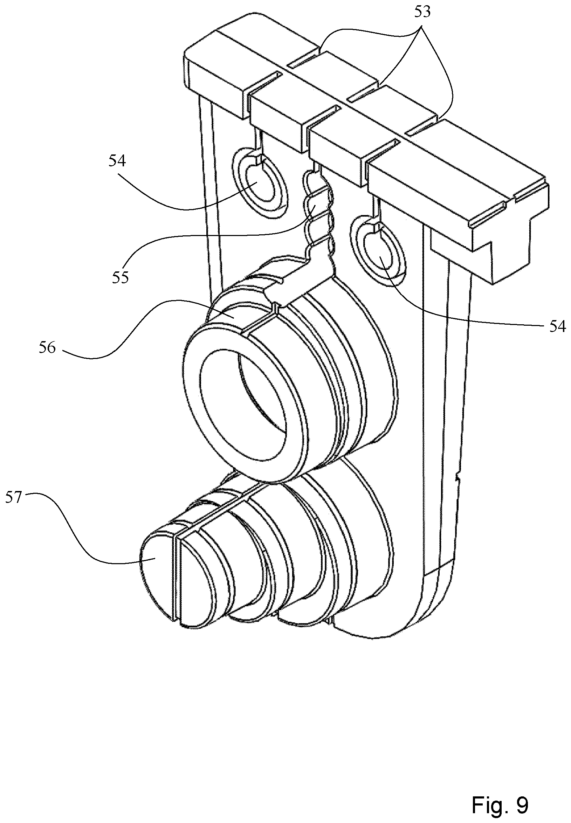

Im Übrigen zeigt Figur 9, dass der oberen Tüllendurchführung 56 aus Figur 8 die vorderen beiden kleineren Tüllenstufen und ein Teil der dritten weggeschnitten worden sind, sodass diese Durchführung 56 an den zweitgrößten der beiden verfügbaren Durchmesser angepasst worden ist. Figur 8 zeigt, dass hierfür eine in Umfangsrichtung verlaufende Einkerbung an jeder Tüllenstufe vorgesehen ist. Dementsprechend erfolgt die Anpassung aller Durchführungen 56 und 57 durch Aufschneiden der richtigen Tüllenstufe entlang dieser Einkerbung und Auftrennen der Einkerbung an der verbleibenden Tülle oben in der Mitte zum Einführen der Leitung.

Bei diesem Beispiel sind die Abstufungen des Durchführungstyps 57 auf Rohrdurchmesser oder Kabeldurchmesser von 5 mm, 7 mm und 10 mm angepasst, während der Durchführungstyp 56 zusätzlich noch die Option für den Durchmesser 12 mm vorsieht. Insgesamt bietet die Dichtung aus den Figuren 7 damit Möglichkeiten für zwei 12 mm-Kabel oder -Leerrohre, nämlich außen oben, ferner 14 Möglichkeiten für Kabel oder Leerrohre zwischen 5 und 10 mm, davon 12 zusätzlich zu den gerade genannten zweien, weitere 14 Durchführungen für Kabel zwischen 2 und 5 mm und schließlich 28 Patchkabeldurchführung.

Natürlich werden die gerade zusammengefassten Möglichkeiten in den meisten Fällen nicht voll ausgeschöpft werden. Vielmehr bieten sie in zweierlei Hinsicht eine gewisse Reserve. Erstens natürlich hinsichtlich der jeweiligen Anzahl, sodass die Anschlussbox z. B. anfangs in geringerem Maß und dann mit zunehmender Ausbaustufe umfangreicher belegt und genutzt werden kann. Zweitens aber auch hinsichtlich der unterschiedlichen Kabeltypen, die der flexiblen Nutzung der Anschlussbox entsprechen.

Der Dichtsteg 50 ist in der Richtung der noch einzulegenden Leitungen breiter als der flächige Teil der Dichtelemente 51 darunter und bildet außerdem auch für sich eine T-Form. Das Profil der Dichtelemente 51 verjüngt sich überdies nach unten. Ferner nimmt die Breite dieses flächigen Teils der Dichtelemente 51 in der Leitungsrichtung (also rechtwinklig zur Betrachtung gerade eben) gesehen ebenfalls nach unten ab.

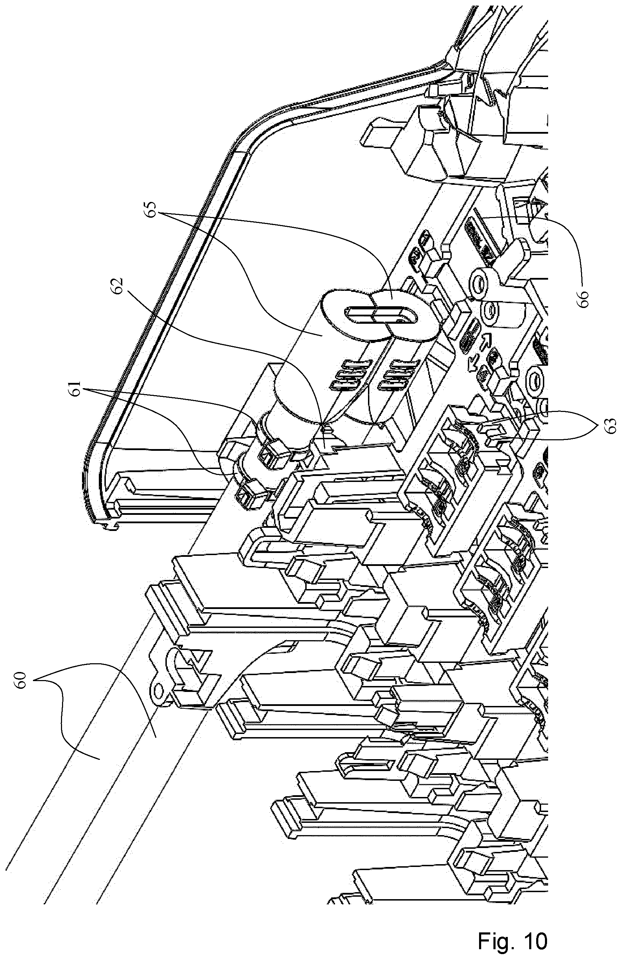

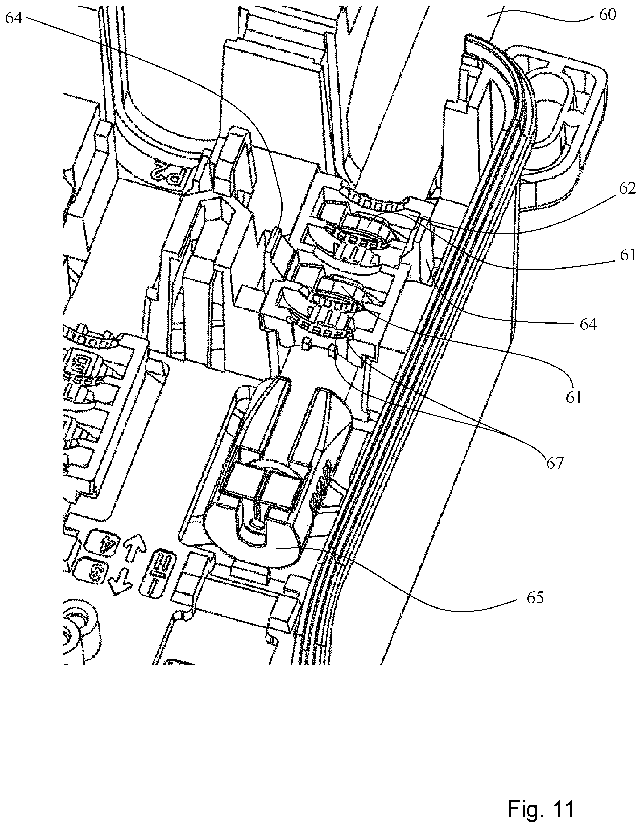

In dieser Form können die Dichtelemente 51 oder die Dichtung insgesamt in die U-förmigen Aufnahmen des Unterteils 1 eingesetzt werden, die ihrerseits, wie die im Folgenden noch zu diskutierenden Figuren 10 und 11 zeigen, beidseits (und unten umlaufend) Ausnehmungen aufweisen, die genau daran formangepasst sind.

Man erkennt in diesen Figuren 10 und 11, dass der horizontale Querteil des T-Profils oben aufliegen kann, während die übrigen Teile, d. h. der vertikale T-ProfilTeil des Stegs 50 und die flächigen Teile der Dichtelemente 51 im Übrigen, von entsprechenden Aufnahmen aufgenommen werden können. Wenn nun der Deckel 2 bei eingelegter Dichtung herunter geklappt und verschlossen wird, so entsteht eine vertikale Anpresskraft, die infolge der beiden Verjüngungen der Dichtelement 51 diese in dichtender Weise in die erwähnten Ausnehmungen hineinpresst und um die eingelegten Kabel herum angedrückt.

Die durch die relativ großen Durchführungen 56 und 57 hindurchgeführten Kabel oder Leerrohre dafür können (von außen nach innen gedacht) sozusagen direkt hinter der in die Anschlussbox eingesetzten Dichtung mechanisch stabil befestigt werden. Es geht im Folgenden also um die Zugentlastung, wozu insbesondere auf die Figuren 10 und 11 Bezug genommen wird. In Figur 10 sieht man die Dichtungsebene (ohne eingezeichnete Dichtung, aber mit den U-förmigen Aufnahmen) links hinten und zusätzlich zwei Leerrohre 60. Diese Leerrohre 60 dienen der späteren Ergänzung von Kabeln, die z. B. hindurchgeblasen werden können. Sie sind in Figur 10 in der Position eingezeichnet, die sie in den Durchführungen 56 und 57 aus den Figuren 7-9 hätten. In Figur 11 ist nur das untere der beiden Leerrohre 60 eingezeichnet und eine andere Perspektive gewählt.

Figur 10 zeigt zwei Kabelbinder 61 um das obere Leerrohr 60. Diese Kabelbinder 61 sind durch ein darunter liegendes Klemmelement 62 geschlungen, das in Figur 11 deutlich besser zu sehen ist und zwischen den beiden Leerrohren 60 liegt. Das Bodenteil 5 und damit die Anschlussbox weisen gemäß den Figuren 10 und 11 unter und über dem eingesetzten Klemmelement 62 jeweils eine Aufnahme für die Leerrohre 60 oder Kabel auf. Entsprechende Klemmelemente 62 zeigen z. B. auch die Figuren 5 und 6 vorne rechts. Sie sind im Bodenteil 5 angeordnet, und zwar im nicht benutzten Zustand entsprechend den Figuren 5 und 6 in einer Ebene (gemäß den Figuren 5 und 6 vorne rechts von nach links hinten gedacht) hinter derjenigen Ebene, in der sie im benutzten Fall, nämlich in Figur 11 rechts oben, angeordnet sind.

In der hinteren Ebene sind sie einstückig mitgespritzte integrale Bestandteile des Bodenteils 5 und können zur Benutzung aus kleinen Stegen ausgebrochen werden, mit denen sie mit dem übrigen Bodenteil 5 verbunden sind. In Figur 10 sind diese Stege mit 63 bezeichnet und unbenutzte Klemmelemente 62 im vorderen linken Bereich zu sehen.

Im ausgebrochenen Zustand können die Klemmelemente einzeln manipuliert werden, sodass z. B. die in Figur 11 dargestellten Kabelbinder 61 für das untere Leerrohr 60 leicht hindurch gefädelt werden können. Dazu weist jedes Klemmelement 62 insgesamt vier Ausnehmungen (Durchbrüche) für Kabelbinder auf, wobei in jeder Ausnehmung ein mittiger Steg zum Umschlingen durch den Kabelbinder 61 vorgesehen ist. In Figur 11 umschlingen die beiden gezeichneten Kabelbinder 61 je einen solchen Steg, während zwei weitere Stege ohne Kabelbinder, aber mit der Markierung T zu sehen sind. Diese Stege sind für die beiden Kabelbinder 61 aus Figur 10 für das obere Leerrohr 60 gedacht und liegen etwas höher als die in Figur 11 von den beiden Kabelbindern 61 verdeckten und etwas tiefer liegenden Stege, die ihrerseits mit B (B für bottom, T für top) markiert sind. Wegen dieser tieferen Lage liegt die Oberseite der beiden Kabelbinder 61 aus Figur 11 so relativ tief, dass sie die Halterung des oberen Leerrohres 60 nicht stört, also insbesondere höchstens auf dem Niveau der Stege mit der Markierung T.

Außerdem sieht man in Figur 11, dass die beiden Ausnehmungen für das untere Leerrohr 60 in der Leitungsrichtung etwas breiter sind, was den Vorteil hat, dass der links jeweils sichtbare Verschluss der beiden Kabelbinder 61 in der Ausnehmung seitlich und relativ tief untergebracht werden kann und ebenfalls das obere Leerrohr 60 nicht stört.

Ferner sieht man vor allem in Figur 11 zwei vertikal hochstehende Arme 64 mit Rastvorsprüngen. Die Klemmelemente 62 können entlang der oberseitigen Schrägen der Rastvorsprünge in eine formangepasste quaderförmigen Ausnehmung für die Klemmelemente 62 heruntergedrückt werden, woraufhin dann die Rastvorsprünge nach einer elastischen Verformung der Hebel 64 einschnappen und das jeweilige Klemmelement 62 sichern. Durch Verbiegen lässt sich die Verrastung wieder lösen, z. B. um in der Situation der Figur 11 das Klemmelement 62 mit dem unteren Leerrohr 60 zu entnehmen und das obere Leerrohr 60 darauf zu befestigen.

In Figur 11 erkennt man schließlich oberseitige Krallvorsprünge 67 in den konkav gerundeten Teilen der Oberseite des Klemmelements 62. Analoge Krallvorsprünge zeigt das Klemmelement 62 auch auf seiner Unterseite für das untere Leerrohr 60 oder Kabel.

In der durch jeweils zwei Kabelbinder redundant und besonders stabil an dem Klemmelement 62 und über dieses formschlüssig und ebenfalls besonders stabil an dem Bodenteil 5 befestigten Form sind die Leerrohre 60 praktisch und effizient zugentlastet. Analog könnte man auch mit entsprechend dicken Ummantelungen von Kabeln selbst verfahren, wenn keine Leerrohr eingesetzt werden soll. Im Übrigen ist diese Form der Zugentlastung hinsichtlich des Leerrohr- oder Kabeldurchmessers flexibel, weil sich die Kabelbinder an unterschiedliche Durchmesser anlegen und die Kabelbinder bei unterschiedlichen Durchmessern entsprechend unterschiedlich eng angezogen werden können. Damit trägt diese Art der Zugentlastung der Flexibilität der Durchführungen 56 und 57 Rechnung.

Die Figuren 10 und 11 zeigen außerdem am jeweiligen innenseitigen Ende der Leerrohre 60 Abdichtungen 65. Die Leerrohre sind so abgelängt oder eingesetzt, dass bei späterem Einbringen eines Kabels und Ersetzen dieser Abdichtungen 65 durch die bereits erwähnten Einzelzugabdichtungen (EZA) letztere nicht über Markierungen 66 im Bodenteil 5 hinausreichen, vgl. Figur 10.

Insgesamt zeigt sich, dass das Einbringen von Leerrohren 60 oder Kabeln generell ohne Hindurchfädeln in Leitungsrichtung erfolgen kann. Nicht nur lassen sich die Dichtung oder die Dichtelemente 51 aus den Figuren 7-9 quer zur Leitungsrichtung einsetzen und entnehmen (und außerhalb der Anschlussbox an der Leitung anbringen). Auch die Befestigung entsprechend den Figuren 10 und 11 kann in dieser Weise und damit praktisch und zeiteffizient erfolgen. Allenfalls beim späteren Einblasen eines Kabels in ein Leerrohr muss eine Bewegung in Leitungsrichtung erfolgen, aber dann ist das Leerrohr hinsichtlich Abdichtung und Zugentlastung fertig montiert und es geht nur noch um das Hinzufügen der EZA.

## Patentansprüche

1. Glasfaser-Anschlussbox mit
einem Gehäuse und
einer Zugentlastungsvorrichtung zum Fixieren einer ersten Ummantelung zumindest einer oder für zumindest eine erste Glasfaserleitung, wobei die Zugentlastungsvorrichtung aufweist
ein Klemmelement, das lösbar in dem Gehäuse montiert oder montierbar ist, und
eine Aufnahme für die erste Ummantelung, die nach dem Lösen und Demontieren des Klemmelements zugänglich ist,
wobei die Zugentlastungsvorrichtung dazu ausgelegt ist, dass das Klemmelement nach Einbringen der ersten Ummantelung in die Aufnahme und nach Wiedermontieren des Klemmelements in dem Gehäuse zu einem Verklemmen der ersten Ummantelung relativ zu dem Gehäuse beiträgt,
wobei das Klemmelement auf einer zu der ersten Ummantelung in deren geklemmtem Zustand abgewandten Seite des Klemmelements eine Haltestruktur für mindestens eine zweite Glasfaserleitung aufweist.

2. Anschlussbox nach Anspruch 1, bei der die Haltestruktur ausgelegt ist für eine zweite Ummantelung zumindest der oder für zumindest die zweite Glasfaserleitung.

3. Anschlussbox nach Anspruch 2, bei der das Klemmelement mindestens eine Ausnehmung, vorzugsweise Öffnung, zum Fixieren eines Kabelbinders relativ zu dem Klemmelement aufweist, mit welchem Kabelbinder die zumindest eine erste oder zweite Ummantelung an dem Klemmelement verklemmt und damit an dem Gehäuse fixiert werden kann.

4. Anschlussbox nach Anspruch 3 mit mindestens einer Ausnehmung zum Fixieren eines Kabelbinders auf einer Seite des Klemmelements und mindestens einer weiteren Ausnehmung zum Fixieren eines weiteren Kabelbinders auf einer anderen Seite des Klemmelements, wobei die Ausnehmung für den Kabelbinder auf derjenigen Seite mit einer für die Unterbringung eines Verschlusses des Kabelbinders ausreichend breiten Ausnehmung ausgestattet ist, welche Seite zu der nach dem Demontieren des Klemmelements zugänglichen Aufnahme für die Ummantelung entgegengesetzt ist.

5. Anschlussbox nach einem der vorstehenden Ansprüche, bei welcher das Klemmelement quer zu einer Leitungsrichtung der ersten Ummantelung demontierbar ist.

6. Anschlussbuchse nach einem der vorstehenden Ansprüche, bei welcher die erste Ummantelung bei demontiertem Klemmelement quer zu ihrer Leitungsrichtung in eingelegter Position in die Aufnahme eingelegt werden kann.

7. Anschlussbox nach einem der vorstehenden Ansprüche, bei welcher die Zugentlastungsvorrichtung eine Führung für das Klemmelement aufweist, in oder entlang der das Klemmelement in die montierte Position gebracht und aus ihr gelöst werden kann, und vorzugsweise eine Rasteinrichtung zum verrastenden Montieren des Klemmelements aufweist.

8. Anschlussbox nach einem der vorstehenden Ansprüche, bei welcher das Klemmelement auf mindestens einer seiner Seiten Krallvorsprünge zur Verbesserung des Fixierens der zumindest einen ersten oder zweiten Ummantelung aufweist.

9. Anschlussbox mit einer Gehäusedichtung zum abgedichteten Durchführen der zumindest einen ersten oder zweiten Ummantelung durch eine Gehäusewand, welche Gehäusedichtung vorzugsweise außerhalb der Zugentlastungsvorrichtung angeordnet ist.

10. Anschlussbox nach einem der vorstehenden Ansprüche mit einer Mehrzahl Zugentlastungsvorrichtungen der beschriebenen Art nebeneinander.

11. Anschlussbox nach Anspruch 10, bei welcher die Mehrzahl Zugentlastungsvorrichtungen parallel zu einer Gehäusewand nebeneinander angeordnet sind und einer Mehrzahl Dichtungen in der Gehäusewand zum Durchführen von Glasfaserleitungen, insbesondere Ummantelungen, zugeordnet sind, wobei die Dichtungen vorzugsweise durch Abtrennen von Elastomerkörperteilen an verschiedene Leitungsdimensionen anpassbar sind.

12. Anschlussbox nach Anspruch 10 oder 11, bei welcher die Mehrzahl Zugentlastungsvorrichtungen parallel zu einer Gehäusewand nebeneinander angeordnet sind und einer Mehrzahl Dichtungen in der Gehäusewand zum Durchführen von Glasfaserleitungen, insbesondere Ummantelungen, zugeordnet sind, welche Dichtungen ausgelegt sind zum Einlegen einer jeweiligen Glasfaserleitung quer zur Leitungsrichtung.

13. Verwendung einer Anschlussbox nach einem der vorstehenden Ansprüche zum Fixieren mindestens einer ersten oder zweiten Ummantelung relativ zu dem Gehäuse.

14. Verwendung nach Anspruch 13, bei welcher die mindestens eine Ummantelung ein Leerrohr ist und die Anschlussbox zum Einblasen zumindest einer Glasfaserleitung, vorzugsweise einen Strangkabels, durch das Leerrohr und Anschließen der Glasfaserleitung bzw. zumindest eines Teils von Glasfaserleitungen des Strangkabels in der Anschlussbox verwendet wird.

15. Verwendung nach einem der Ansprüche 13-14, bei welcher Verwendung eine Mehrzahl Anschlussboxen nach einem der Ansprüche 1-12 verwendet wird und für mindestens zwei aus der Mehrzahl Ummantelungen mit unterschiedlichem Durchmesser in der jeweiligen Anschlussbox fixiert werden.

## Geänderte Patentansprüche

### Geänderte Patentansprüche gemäss Regel 137(2) EPÜ.

1. Glasfaser-Anschlussbox mit
einem Gehäuse (1, 2) und
einer Zugentlastungsvorrichtung zum Fixieren einer ersten Ummantelung (60) zumindest einer oder für zumindest eine erste Glasfaserleitung, wobei die Zugentlastungsvorrichtung aufweist
ein Klemmelement (62), das lösbar in dem Gehäuse (1, 2) montiert oder montierbar ist, und
eine Aufnahme für die erste Ummantelung (60), die nach dem Lösen und Demontieren des Klemmelements (62) zugänglich ist,
wobei die Zugentlastungsvorrichtung dazu ausgelegt ist, dass das Klemmelement (62) nach Einbringen der ersten Ummantelung (60) in die Aufnahme und nach Wiedermontieren des Klemmelements (62) in dem Gehäuse (1, 2) zu einem Verklemmen der ersten Ummantelung (60) relativ zu dem Gehäuse (1, 2) beiträgt,
wobei das Klemmelement (62) auf einer zu der ersten Ummantelung (60) in deren geklemmtem Zustand abgewandten Seite des Klemmelements (62) eine Haltestruktur für mindestens eine zweite Glasfaserleitung aufweist, und wobei die erste Ummantelung (60) bei demontiertem Klemmelement (62) quer zu ihrer Leitungsrichtung in eingelegter Position in die Aufnahme eingelegt werden kann,
**dadurch gekennzeichnet, dass** die Zugentlastungsvorrichtung eine Führung für das Klemmelement (62) aufweist, in oder entlang der das Klemmelement (62) in die montierte Position gebracht und aus ihr gelöst werden kann, und vorzugsweise eine Rasteinrichtung (64) zum verrastenden Montieren des Klemmelements (62) aufweist.

2. Anschlussbox nach Anspruch 1, bei der die Haltestruktur ausgelegt ist für eine zweite Ummantelung (60) zumindest der oder für zumindest die zweite Glasfaserleitung.

3. Anschlussbox nach Anspruch 2, bei der das Klemmelement (62) mindestens eine Ausnehmung, vorzugsweise Öffnung, zum Fixieren eines Kabelbinders (61) relativ zu dem Klemmelement (62) aufweist, mit welchem Kabelbinder (61) die zumindest eine erste oder zweite Ummantelung (60) an dem Klemmelement (62) verklemmt und damit an dem Gehäuse (1, 2) fixiert werden kann.

4. Anschlussbox nach Anspruch 3 mit mindestens einer Ausnehmung zum Fixieren eines Kabelbinders (61) auf einer Seite des Klemmelements (62) und mindestens einer weiteren Ausnehmung zum Fixieren eines weiteren Kabelbinders (61) auf einer anderen Seite des Klemmelements (62), wobei die Ausnehmung für den Kabelbinder (61) auf derjenigen Seite mit einer für die Unterbringung eines Verschlusses des Kabelbinders (61) ausreichend breiten Ausnehmung ausgestattet ist, welche Seite zu der nach dem Demontieren des Klemmelements (62) zugänglichen Aufnahme für die Ummantelung (60) entgegengesetzt ist.

5. Anschlussbox nach einem der vorstehenden Ansprüche, bei welcher das Klemmelement (62) quer zu einer Leitungsrichtung der ersten Ummantelung (60) demontierbar ist.

6. Anschlussbox nach einem der vorstehenden Ansprüche, bei welcher das Klemmelement (62) auf mindestens einer seiner Seiten Krallvorsprünge (67) zur Verbesserung des Fixierens der zumindest einen ersten oder zweiten Ummantelung (60) aufweist.

7. Anschlussbox nach einem der vorstehenden Ansprüche mit einer Gehäusedichtung (50) zum abgedichteten Durchführen der zumindest einen ersten oder zweiten Ummantelung (60) durch eine Gehäusewand, welche Gehäusedichtung (50) vorzugsweise außerhalb der Zugentlastungsvorrichtung angeordnet ist.

8. Anschlussbox nach einem der vorstehenden Ansprüche mit einer Mehrzahl Zugentlastungsvorrichtungen der beschriebenen Art nebeneinander.

9. Anschlussbox nach Anspruch 8, bei welcher die Mehrzahl Zugentlastungsvorrichtungen parallel zu einer Gehäusewand nebeneinander angeordnet sind und einer Mehrzahl Dichtungen (50) in der Gehäusewand zum Durchführen von Glasfaserleitungen, insbesondere Ummantelungen (60), zugeordnet sind, wobei die Dichtungen (50) vorzugsweise durch Abtrennen von Elastomerkörperteilen (54, 56, 57) an verschiedene Leitungsdimensionen anpassbar sind.

10. Anschlussbox nach Anspruch 8 oder 9, bei welcher die Mehrzahl Zugentlastungsvorrichtungen parallel zu einer Gehäusewand nebeneinander angeordnet sind und einer Mehrzahl Dichtungen (50) in der Gehäusewand zum Durchführen von Glasfaserleitungen, insbesondere Ummantelungen (60), zugeordnet sind, welche Dichtungen (50) ausgelegt sind zum Einlegen einer jeweiligen Glasfaserleitung quer zur Leitungsrichtung.

11. Verwendung einer Anschlussbox nach einem der vorstehenden Ansprüche zum Fixieren mindestens einer ersten oder zweiten Ummantelung (60) relativ zu dem Gehäuse (1, 2).

12. Verwendung nach Anspruch 11, bei welcher die mindestens eine Ummantelung (60) ein Leerrohr ist und die Anschlussbox zum Einblasen zumindest einer Glasfaserleitung, vorzugsweise einen Strangkabels, durch das Leerrohr und Anschließen der Glasfaserleitung bzw. zumindest eines Teils von Glasfaserleitungen des Strangkabels in der Anschlussbox verwendet wird.

13. Verwendung nach einem der Ansprüche 11-12, bei welcher Verwendung eine Mehrzahl Anschlussboxen nach einem der Ansprüche 1-12 verwendet wird und für mindestens zwei aus der Mehrzahl Ummantelungen (60) mit unterschiedlichem Durchmesser in der jeweiligen Anschlussbox fixiert werden.
